# EUROPEAN PATENT APPLICATION

(11) **EP 3 128 470 A1**
(43) Date of publication of application: **08.02.2017**
(21) Application number: 16182907.2
(22) Date of filing: 05.08.2016
(51) Int. Cl.: G06Q 10/06, G06Q 10/08

(54) **GRAPHICAL USER INTERFACE INDICATING VIRTUAL STORAGE OF CONSUMABLE ITEMS**

(30) Priority: 07.08.2015 JP 2015157149
(71) Applicant: Toshiba TEC Kabushiki Kaisha, Tokyo 141-0032 (JP)
(72) Inventor: OKUMA, Yumiko, Shinagawa-ku, Tokyo 141-8562 (JP); NAKAMURA, Mahina, Shinagawa-ku, Tokyo 141-8562 (JP); SAMBE, Masanori, Shinagawa-ku, Tokyo 141-8562 (JP)
(74) Representative: Takeuchi, Maya

(57) **Abstract**

A computing device is configured to display a graphical user interface on a display unit thereof based on purchase data of one or more consumable items that have been received through a communication interface thereof and a user input that has been made. The graphical user interface includes a background layer including a virtual image of storage, an item layer including one or more virtual images of said one or more consumable items, the item layer being overlaid on the background layer, so as to virtually indicate that said one or more consumable items are stocked in the storage, and an indicator layer including one or more indicators, each of which corresponding to one of said one or more consumable items, the indicator layer being overlaid on the item layer, so that each of said one or more indicators indicates a consumption state of a corresponding consumable item.

## Description

Embodiments described herein relate generally to a graphical user interface indicating virtual storage of consumable items.

### BACKGROUND

Consumable goods, in particular, some food products purchased at a retailer is typically stored in storage including a refrigerator, a shelf, or the like, and consumed for cooking, or the like. In the related art, there is a technology of managing a best-before date or a use-by date with respect to each kind of food product stored in the storage, in order to reduce waste. In addition to the best-before date or the use-by date of the food products, it would be desirable to manage other conditions.

### DESCRIPTION OF THE DRAWINGS

FIG. 1 illustrates a configuration of an electronic receipt system according to an embodiment.
FIG. 2 is a block diagram of a user terminal according to the embodiment.
FIG. 3 is a block diagram of a receipt server according to the embodiment.
FIG. 4 is a block diagram of a purchase management server according to the embodiment.
FIG. 5 illustrates an example of purchase management data in the embodiment.
FIG. 6 is a flowchart which illustrates operations of the purchase management server according to the embodiment.
FIG. 7 is a flowchart which illustrates operations of the user terminal according to the embodiment.
FIG. 8 illustrates an example of a stock management screen according to the embodiment.
FIGS. 9A to 9C illustrate examples of detail screens according to the embodiment.
FIGS. 10A and 10B illustrate examples of screens to input an item image according to the embodiment.
FIG. 11 illustrates a screen to input consumed amount according to the embodiment.
FIG. 12 illustrates another screen to input consumed amount according to the embodiment.
FIG. 13 illustrates still another screen to input consumed amount according to the embodiment.
FIG. 14 illustrates a screen to input a consumed state according to the embodiment.

### DETAILED DESCRIPTION

An embodiment provides a computing device, a method, and a non-transitory computer-readable storage medium for displaying a graphical user interface that enables a user to intuitively recognize a remaining amount of a stocked item.

In general, according to an embodiment, a computing device is configured to display a graphical user interface on a display unit thereof based on purchase data of one or more consumable items that have been received through a communication interface thereof and a user input that has been made on the computing device. The graphical user interface includes a background layer including a virtual image of storage, an item layer including one or more virtual images of said one or more consumable items, the item layer being overlaid on the background layer, so as to virtually indicate that said one or more consumable items are stocked in the storage, and an indicator layer including one or more indicators, each of which corresponding to one of said one or more consumable items, the indicator layer being overlaid on the item layer, so that each of said one or more indicators indicates a consumption state of a corresponding consumable item.

Hereinafter, an embodiment will be described with reference to the drawings.

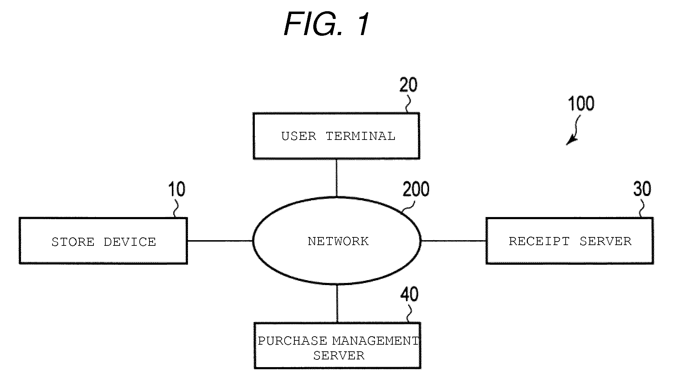

FIG. 1 illustrates an entire configuration of an electronic receipt system according to an embodiment. The electronic receipt system is a system that stores transaction data of merchandise purchased in a store, or the like, as receipt data (electronic sheet) in a center (e.g., a receipt server 30), so that the receipt data can be browsed on an electronic apparatus (e.g., a user terminal 20).

According to the electronic receipt system of the present embodiment, it is possible to manage the purchased merchandise and a use state thereof (whether or not it is unused, remaining amount, the number of remaining articles, or the like) in the user terminal 20.

As illustrated in FIG. 1, an electronic receipt system 100 includes a store device 10, the user terminal 20, the receipt server 30, and a purchase management server 40. The store device 10, the user terminal 20, the receipt server 30, and the purchase management server 40 can perform data communication through a network 200. The network 200 includes, for example, the Internet, a local area network (LAN), a dedicated line, a mobile communication network, or the like.

The store device 10 is provided in a store which sells various kinds of merchandise including foodstuff, such as a supermarket and a convenience store. FIG. 1 illustrates only one store device 10 provided in one store. The electronic receipt system 100 includes a plurality of store devices 10 which are respectively provided in a plurality of stores. Each of the store devices 10, for example, reads a barcode (merchandise code) attached to merchandise using a scanner and generates merchandise sales data to perform a checkout process, and transmits receipt data which indicates a result of the checkout process to the receipt server 30.

The user terminal 20 is used as a display device which displays various screens based on various data received from the receipt server 30 and the purchase management server 40, in response to a user operation. The user terminal 20 displays a screen, or the like, which shows the receipt data stored in the receipt server 30, for example. FIG. 1 illustrates only one user terminal 20 which is used by one user. In the electronic receipt system 100, a plurality of the user terminals 20 used by a plurality of users is included. In addition, one user may use a plurality of user terminals 20, or a plurality of users may share one user terminal 20.

In addition, a user of the user terminal 20 goes through a membership registration, in order to use a service provided by the receipt server 30 and the purchase management server 40. A user who finished the membership registration is assigned a unique member ID. When the user accesses the receipt server 30 or the purchase management server 40 from the user terminal 20, it is possible to obtain data related to the user himself, by designating the member ID.

The receipt server 30 collects receipt data, which indicates a result of the checkout process using the store device 10, from the store device 10, and stores the collected data. The receipt server 30 generates receipt screen data which indicates contents of the receipt data, and transmits the receipt screen data to the user terminal 20. FIG. 1 illustrates only one receipt server 30 which corresponds to one business entity (company). In the electronic receipt system 100, for example, a plurality of receipt servers 30 which corresponds to a plurality of companies, respectively, is included.

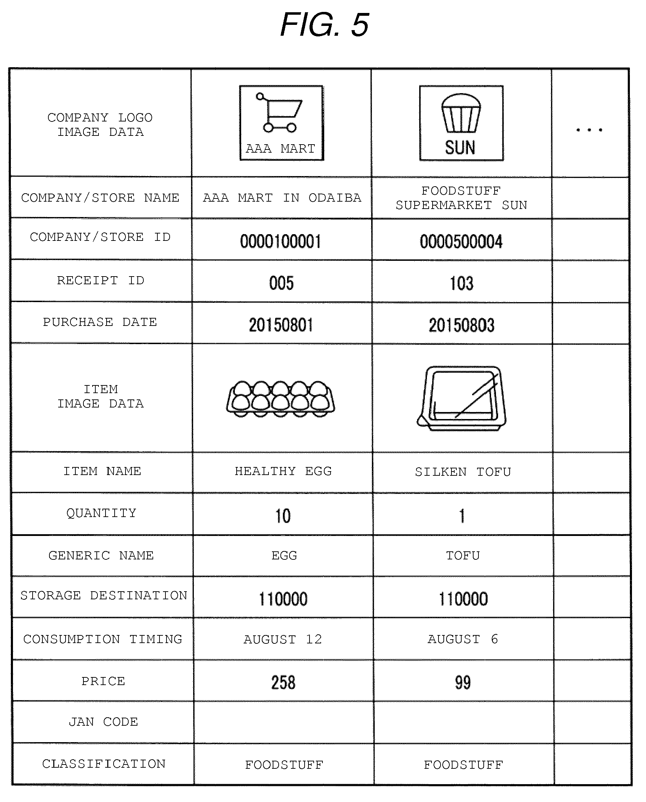

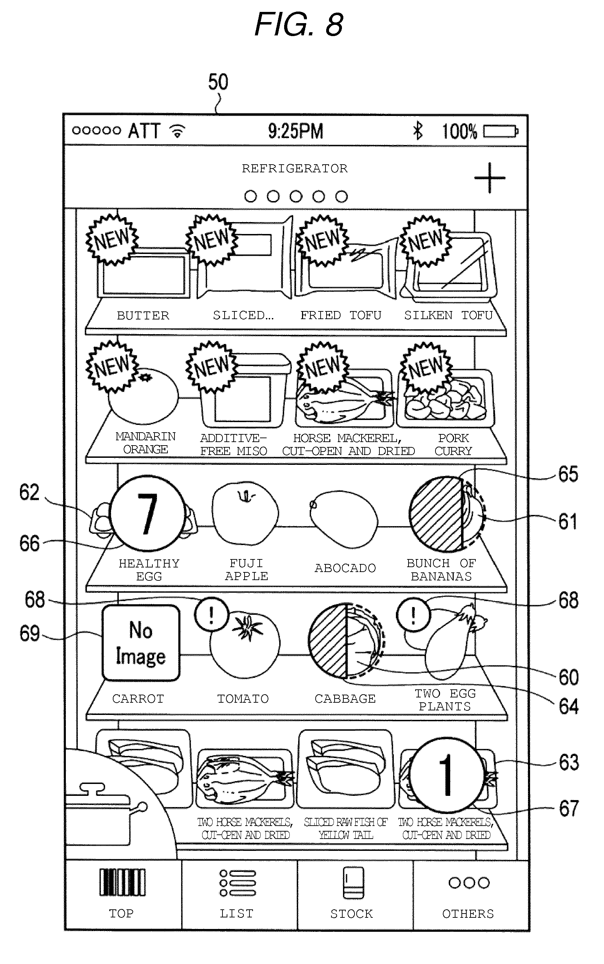

The purchase management server 40 collects the receipt data from the receipt servers 30 of a plurality of companies, and provides a service for managing merchandise purchased by a user and a use state thereof in the user terminal 20, based on the receipt data. The purchase management server 40 manages the receipt data collected from the plurality of receipt servers 30 for each user, for example, and generates purchase management data. The purchase management server 40 creates stock management screen data for displaying a stock management screen (graphical user interface, refer to FIG. 8) on the user terminal 20 based on the purchase management data, and transmits the stock management screen data to the user terminal 20 (in case of a first method described below). Alternatively, the purchase management server 40 transmits purchase management data to the user terminal 20, and displays a stock management screen based on the purchase management data on the user terminal 20 (in case of a second method described below). The purchase management data will be described below in detail (refer to FIG. 5). Image data for displaying merchandise (commodity) on the stock management screen is included in the stock management screen data and the purchase management data.

On the stock management screen, for example, an image of an item purchased by a user (icon, thumbnail, illustration, characters, or the like) is displayed. When there is a plurality of different items as stock, images of the plurality of items is displayed as a list on one screen. An image corresponding to an item is changed so that it is possible to show whether or not the item is unused, based on consumption amount data which indicates a use state of the item, which is input through a user operation. For example, when the item is foodstuff, an image corresponding to the item is changed so as to show a consumed amount (or remaining amount), or the number of consumed portions (or the number of remaining portions), in order to show whether or not the foodstuff is unused. In addition, as a form of the change of image, for example, there is a form of adding a use information image, which indicates a consumption state of the item (remaining amount, or the like) to the image of the item, a form of changing the image of the item according to a consumption amount thereof, or the like. In addition, the use information image can be displayed by being overlapped with the item image (overwrite display), or can be displayed at a position which is close to the item image. In this manner, a user can intuitively (virtually) recognize a remaining amount of an item which is stocked in a storage place such as a refrigerator, for example, by referring to a stock management screen.

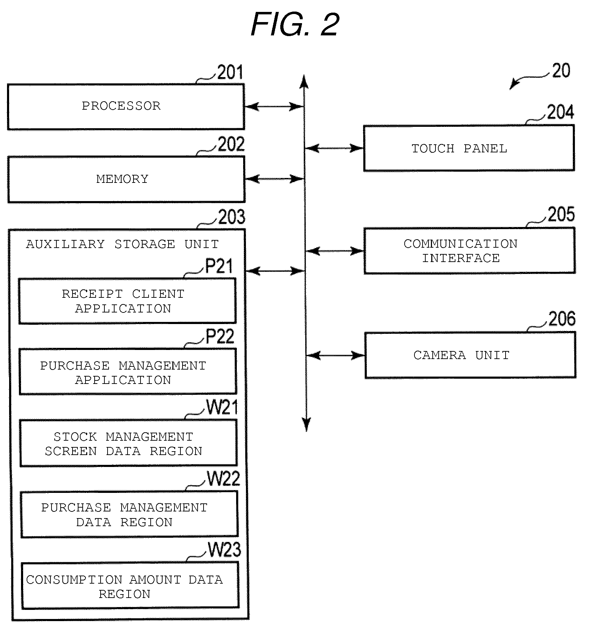

FIG. 2 is a block diagram of the user terminal 20 according to the present embodiment.

The user terminal 20 is, for example, an electronic apparatus (computer) such as a smart phone, a mobile phone, a tablet terminal, and a personal computer. The user terminal 20 is used as a display device which displays various kinds of information.

In the user terminal 20, a processor 201, a memory 202, an auxiliary storage unit 203, a touch panel display 204, a communication interface 205, and a camera unit 206 are connected to each other through a bus.

The processor 201 is a circuit which controls each unit of the user terminal 20 in order to perform various processes by executing a program of an operating system, an application program, and the like, which are stored in the memory 202.

The memory 202 includes a non-volatile memory unit and a volatile memory unit. The memory 202 stores data to be referred to when the processor 201 executes various processes, in addition to a program which is executed by the processor 201. The program stored in the memory 202 includes a receipt client application program P21 (hereinafter, receipt client application P21) which is read from the auxiliary storage unit 203, and a purchase management application program (hereinafter, purchase management application P22).

The auxiliary storage unit 203 is, for example, a hard disk unit (hard disk drive (HDD)), an SSD unit (solid state drive), or the like. In the auxiliary storage unit 203, a program executed by the processor 201 and data processed by the processor 201 are stored.

The program stored in the auxiliary storage unit 203 includes, for example, the receipt client application P21 and the purchase management application P22. The receipt client application P21 is a control program for the user terminal 20 to browse receipt data stored in the receipt server 30, as a receipt client. The purchase management application P22 is a control program for the user terminal 20 to display the stock management screen based on data received from the purchase management server 40. The purchase management application P22 is executed to perform the first method in which a stock management screen is displayed according to stock management screen data received from the purchase management server 40, or the second method in which the stock management screen is displayed, by generating stock management screen data based on the purchase management data received from the purchase management server 40.

The auxiliary storage unit 203 includes, for example, a stock management screen data region W21 which stores the stock management screen data for displaying the stock management screen, a purchase management data region W22 for storing the purchase management data received from the purchase management server 40 when the stock management screen is displayed through the second method, and a consumption amount data region W23 for storing consumption amount data, which indicates a use state of items input through a user operation of the stock management screen, and the like. In addition, the auxiliary storage unit 203 stores various kinds of data such as background image data for a background of the stock management screen, which is used when generating the stock management screen data based on the purchase management data through the second method, and use information image data which represents a use state of the items.

In addition, the user terminal 20 according to the present embodiment can manage stock of items other than purchased items using the stock management screen, using the purchase management application P22. For example, the user terminal 20 manages foodstuff received from another user, and food, confectionery, or the like, which is made at home, by registering thereof as stocked items. When registering an item, various kinds of data related to the item (image data, name, registration date, consumption timing, or the like, thereof) is input to the use terminal 20 through a user operation. The various kinds of input data are stored in the auxiliary storage unit 203 (for example, purchase management data region W22).

The touch panel display 204 functions as an input unit and a display unit of the user terminal 20. Various screens are displayed on the touch panel display 204 by the processor 201 performing processing based on various programs. For example, the touch panel display 204 displays the stock management screen by the processor 201 performing a process based on the purchase management application P22.

The communication interface 205 is an interface for data communication which is performed through the network 200.

The camera unit 206 outputs image data of an image captured according to a user operation. The camera unit 206 is used to acquire image data of an item to be managed using the purchase management application P22, for example.

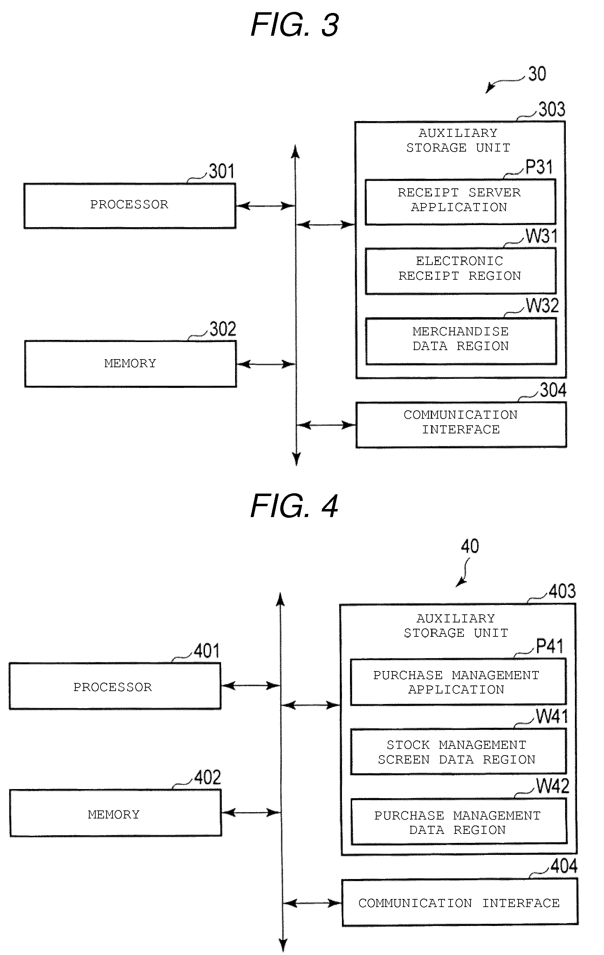

FIG. 3 is a block diagram of the receipt server 30 according to the present embodiment.

In the receipt server 30, a processor 301, a memory 302, an auxiliary storage unit 303, and a communication interface 304 are connected to each other through a bus.

The processor 301 is a circuit which controls each unit of the receipt server 30 in order to perform various processes, by executing a program of an operating system, an application program, and the like, which are stored in the memory 302.

The memory 302 includes a non-volatile memory unit and a volatile memory unit. The memory 302 stores data to be referred to when the processor 301 performs various processes, in addition to a program which is performed by the processor 301. The program stored in the memory 302 includes a receipt server application program P31 (hereinafter, receipt server application P31) which is read from the auxiliary storage unit 303.

The auxiliary storage unit 303 is, for example, an HDD, an SSD, or the like. The auxiliary storage unit 303 stores a program executed by the processor 301 and data processed by the processor 301.

The application program stored in the auxiliary storage unit 303 includes the receipt server application P31. The receipt server application P31 is a control program for executing various processes related to receipt data, and executed to control reception of receipt data from the store device 10, transmission of the receipt data to the user terminal 20 or the purchase management server 40, or the like, for example.

The auxiliary storage unit 303 includes an electronic receipt region W31 for storing receipt data, a merchandise data region W32 for storing merchandise data related to merchandise registered by each store (store device 10), and the like. The data in the electronic receipt region W31 are stored for each user (member) who uses a browsing service of an electronic receipt which is provided by the receipt server 30.

The communication interface 304 is an interface for data communication performed through the network 200.

FIG. 4 is a block diagram of the purchase management server 40 according to the present embodiment.

The purchase management server 40 includes a processor 401, a memory 402, an auxiliary storage unit 403, a communication interface 404, a system transmission path 405, and the like. The processor 401, the memory 402, the auxiliary storage unit 403, the communication interface 404 are connected through the system transmission path 405. The system transmission path 405 includes an address bus, a data bus, a line for a control signal, and the like.

In the purchase management server 40, the processor 401, the memory 402, the auxiliary storage unit 403, and the communication interface 404 are connected to each other through a bus.

The processor 401 is a circuit which controls each unit of the purchase management server 40 in order to perform various processes, by executing a program of an operating system, an application program, or the like, which are stored in the memory 402.

The memory 402 includes a non-volatile memory unit and a volatile memory unit. The memory 402 stores data to be referred to when the processor 401 performs various processes, in addition to a program which is executed by the processor 401. The program stored in the memory 402 includes a purchase management application program P41 (hereinafter, purchase management application P41) which is read from the auxiliary storage unit 403.

The auxiliary storage unit 403 is, for example, a HDD, an SSD, or the like. The auxiliary storage unit 403 stores a program executed by the processor 401 and data processed by the processor 401.

The program stored in the auxiliary storage unit 403 includes, for example, the purchase management application P41. The purchase management application P41 is a control program for displaying the stock management screen in the user terminal 20, and executed to control reception of receipt data from the receipt server 30, generation of the purchase management data based on the receipt data, or the like. In addition, the purchase management application P41 is executed to control generation of the stock management screen data for displaying the stock management screen, based on the purchase management data, transmission of the stock management screen data to the user terminal 20, and display of the stock management screen based on the purchase management application P22 of the user terminal 20, when the first method is used. In addition, the purchase management application P41 is executed to transmit the purchase management data to the user terminal 20, so that the user terminal 20 executes the purchase management application P22 to display the stock management screen which is obtained based on the purchase management data, when the second method is used.

The auxiliary storage unit 403 includes a stock management screen region W41 for storing the stock management screen data which is generated in order to display the stock management screen in the user terminal 20 when the first method is used, and a purchase management data region W42 for storing the purchase management data which is created based on receipt data. In addition, the auxiliary storage unit 403 stores various data such as background image data for a background of the stock management screen, use information image data which represents a use state of items, and the like, which are used in order to generate the stock management screen data, when the first method is used. Data in the stock management screen region W41 and the purchase management data are W42 are stored for each user (member) who uses a service provided with the purchase management server 40. In addition, when the first method is used, the auxiliary storage unit 403 stores consumption amount data with respect to each item, image data of each item, and the like, which are transmitted from the user terminal 20.

The communication interface 404 is an interface for data communication performed through the network 200.

FIG. 5 illustrates an example of purchase management data according to the present embodiment.

The purchase management data are generated in the purchase management server 40 based on receipt data received from the receipt server 30. The purchase management data include data used to display the stock management screen with respect to each item purchased by one user in each store.

The receipt data (electronic sheet) received from the receipt server 30 include, for example, a member ID, a company code (ID) (identification code of company which operates store), a store code (ID), a receipt number (ID), a transaction date and time (purchase date of commodity), a merchandise code of a purchased item (for example, Japanese Article Number (JAN) code), merchandise sales data (unit price, the number of pieces, sales method, amount of money deposited, or the like).

The purchase management server 40 generates purchase management data, which includes each data illustrated in FIG. 5, for example, based on receipt data. The purchase management data illustrated in FIG. 5 include, company logo data, name of company/store, ID of company/store, a receipt ID, a purchase date, merchandise (item) image data, a name of merchandise (item), a quantity, a generic name, a storage destination, consumption timing, a price, a JAN code, and a classification.

The storage destination indicates a storage place (e.g., refrigerator (freezer), a food storage, a general storage, or the like) in a typical home. The consumption timing indicates a recommended use-end date of item (foodstuff), and is determined based on a period determined based on a purchase date thereof, for example.

Portion of the purchase management data that are not included in the receipt data is obtained from merchandise data of the merchandise (item) which is indicated by a JAN code, for example. For example, when a general name, a merchandise name, a quantity, a storage destination are included in the merchandise data, such data are used as the purchase management data.

In addition, when quantity data are not included in the merchandise data, the purchase management server 40 can extract a character string which indicates quantity using, for example, a known character analyzing process, and adds thereof to data of merchandise name (text data) included in the merchandise data. For example, when the merchandise name is "a pack containing ten healthy eggs", the purchase management server 40 extracts a character string of "ten", and adds "10" as the quantity data.

Company logo data and merchandise image data may be registered by a store (store device 10) similarly to the merchandise data, and may be registered in advance using another method. The merchandise image data are used to display an image of an item on the stock management screen of the user terminal 20. The purchase management server 40 adds the company logo data and the merchandise image data which correspond to the item to the purchase management data, based on the receipt data.

In addition, in the above description, data not included in the receipt data are added to the purchase management data in the purchase management server 40; however, the purchase management data may be generated by the store device 10 or the receipt server 30 and transmitted to the purchase management server 40.

In addition, the purchase management data generated by the purchase management server 40 may not all of the above described data. When some of data necessary for the stock management screen are missing, it is possible to add the missing data using a function of the purchase management application P22 in the user terminal 20. For example, when merchandise image data are not included in purchase management data of a predetermined item, an image of the predetermined item will not be displayed on the stock management screen of the user terminal 20. In this case, the user terminal 20 can obtain an image of the item captured by the camera unit 206 as the merchandise image data. The user terminal 20 displays the merchandise image data obtained through the camera unit 206 as the image of the predetermined item on the stock management screen. Similarly, when data of a merchandise name to be displayed on the stock management screen is missing, the user terminal 20 can receive an input of the merchandise name (text) through a user operation of a software keyboard displayed on the touch panel display 204, and display the input merchandise name.

Subsequently, operations of the electronic receipt system according to the present embodiment will be described.

When purchasing merchandise (items) in a store, a user activates the receipt client application P21 on the user terminal 20, and displays a barcode corresponding to a member ID of the user, which has been issued at membership registration, on the touch panel display 204. The user causes a scanner of the store device 10 to read the barcode displayed on the touch panel display 204. The store device 10 transmits receipt data regarding the merchandise purchased by the user to the receipt server 30 in correlation with a member ID indicated by the barcode. The receipt server 30 stores the receipt data in correlation with the user (member ID). The purchase management server 40 receives receipt data associated with each user (member) from each of the receipt servers 30, generates purchase management data, and stores the purchase management data in the purchase data region W42 of the auxiliary storage unit 403.

Hereinafter, operations of the purchase management server 40 and the user terminal 20 when displaying the stock management screen on the user terminal 20 through the first method will be described. According to the first method, the user terminal 20 receives stock management screen data generated by the purchase management server 40, and displays a stock management screen according to the stock management screen data.

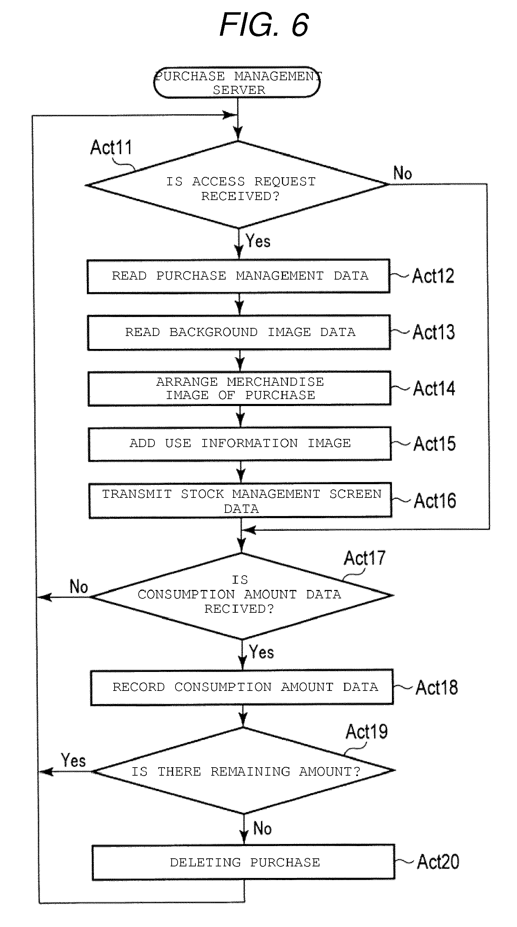

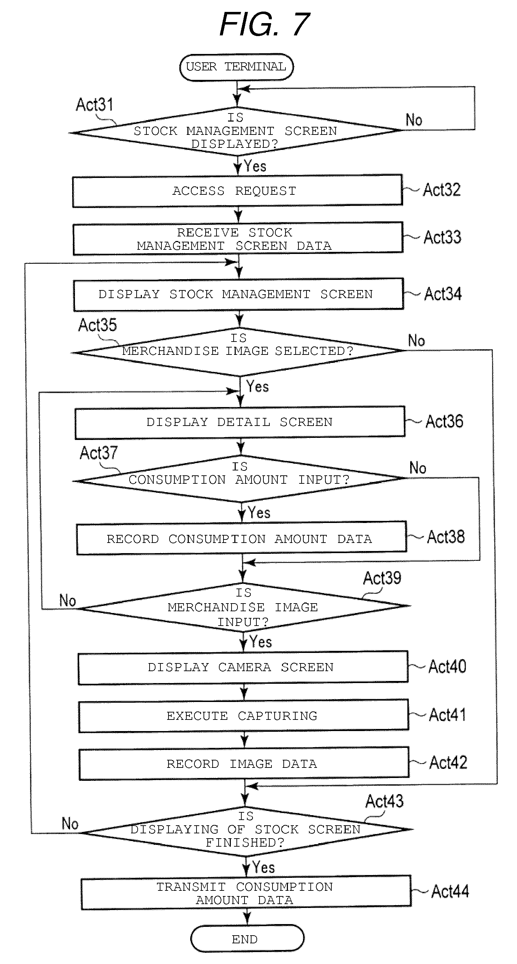

FIG. 6 is a flowchart which illustrates operations of the purchase management server 40 according to the present embodiment, and FIG. 7 is a flowchart which illustrates operations of the user terminal 20 according to the present embodiment.

The processor 201 of the user terminal 20, when the purchase management application P22 is started up in response to a user operation and a display request for the stock management screen is instructed (ACT 31), accesses the purchase management server 40 so as to display the stock management screen (ACT 32). At this time, the processor 201 designates a member ID of a user (member).

When receiving an access request for displaying the stock management screen from the user terminal 20 (Yes in ACT 11), the processor 401 of the purchase management server 40 reads purchase management data corresponding to the user from the purchase management data region W42 of the auxiliary storage unit 403 (ACT 12).

The processor 401 reads background image data for a background of the stock management screen from the auxiliary storage unit 403, in order to create the stock management screen (ACT 13), and arranges an item image, a merchandise name, and the like, of an item on the background image. At this time, the processor 401 arranges the item image based on merchandise image data of each item included in the purchase management data (ACT 14). For example, when creating a stock management screen for a refrigerator as a storage destination, the processor 401 arranges merchandise images corresponding to a plurality of items so that each item image is shown in an image of the refrigerator as the background image.

In addition, the processor 401 adds a use information image to the item image in accordance with consumption amount data input through the user terminal 20 (ACT 15). The use information image is an image for a user to intuitively recognize a remaining amount of the item, by looking at the stock management screen.

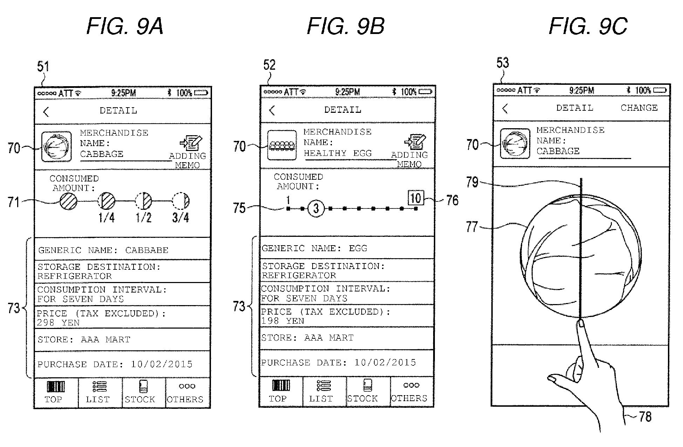

The consumption amount data are input, through a user operation on the stock management screen of the user terminal 20, and indicate consumption state of the corresponding item. A procedure to input the consumption amount data in the user terminal 20 will be described below in detail (refer to FIGS. 9A to 9C).

The processor 401 generates stock management screen data which includes a merchandise image and a use information image, and transmits the stock management screen data to the user terminal 20 (ACT 16). In addition, the processor 401 transmits purchase management data (or receipt data) along with the stock management screen data.

When receiving the stock management screen data from the purchase management server 40 (ACT 33), the processor 201 of the user terminal 20 displays a stock management screen on the touch panel display 204 based on the stock management screen data (ACT 34).

FIG. 8 illustrates an example of a stock management screen 50 displayed on the user terminal 20 according to the present embodiment. In addition, FIG. 8 illustrates an example of the stock management screen 50 when items to be displayed are foodstuff and a storage destination thereof is a refrigerator. In the stock management screen 50, an image of a refrigerator is displayed as a background image (background layer), and a plurality of item images (item layer) is arranged in the background image. The user terminal 20 can also display a stock management screen corresponding to a food stocker, a general stocker, a freezer, or the like, as a storage destination. The user terminal 20 displays a stock management screen including a background image of a storage destination.

In the stock management screen 50 illustrated in FIG. 8, item images of a plurality of items and item names are arranged on one screen (4x5) in correlation with each other. When it is not possible to display all item images on one screen, the processor 201 switches a screen according to a user operation (for example, a flick operation on the touch panel display 204), and displays item images not disposed on the original screen.

On the stock management screen 50, an image of each item which was newly added (merchandise newly purchased by user) is arranged at a higher position, and a new mark (for example, texts of "NEW") which indicates that the item is new is added. In addition, on the stock management screen 50, foodstuff such as vegetable, fruit, fish, and seasoning, for example, are collectively sorted by the type of food.

In addition, the stock management screen 50 displays use information images corresponding to item images of 60, 61, 62, and 63 for which consumption amount data were input (method of inputting consumption amount data will be described below in detail). In addition, on the stock management screen 50, the use information image is overlaid on the corresponding item image. For example, a use information image 64 (a gauge image on an indicator layer) which indicates that a remaining amount (consumption amount) is 1/2 is overlaid on an item image 60 in FIG. 8, and a use information image 65 (a gauge image on the indicator layer) which indicates that a remaining amount (consumption amount) is 1/3 is overlaid on an item image 61. A user can easily recognize a remaining amount of items by referring to the use information images 64 and 65 overlaid on the item images 60 and 61, respectively. Similarly, a use information image 66 (on the indicator layer) which indicates that the number of remaining portion is 7 is overlaid on an item image 62, and a use information image 67 (on the indicator layer) which indicates that the number of remaining pieces is 1 is overlaid on an item image 63. A user can easily recognize the number of remaining portion (pieces) of items by referring to the use information images 66 and 67 overlaid on the item images 62 and 63.

In this manner, on the stock management screen 50, it is possible to easily recognize whether or not items in stock are unused, by displaying the corresponding item images 60 to 63 with the use information images 64 to 67. In addition, , it is possible to easily recognize a stock amount, since a use information image indicating a remaining amount (consumption amount) or the number of remaining articles is displayed on the stock management screen 50 according to a type of items.

In addition, a mark 68, which is attached to an item image on the stock management screen 50, is attached according to consumption timing included in the purchase management data, and attached to promote early consumption of the item. For example, the mark 68 is attached to an item image of which an end date of consumption is close (for example, two days remaining), or has come.

In addition, a rectangular image 69 represents that item image data corresponding to the item is not included in the purchase management data. If an item image of the item is input through a user operation of the use terminal 20, the rectangular image 69 is replaced with the input item image.

The item images and the rectangular image 69 displayed on the stock management screen 50 are used as icons to trigger a predetermined operation. The processor 201 performs functions corresponding to the icons in response to a user operation. For example, when one of the item images and the rectangular image is selected by a tapping operation, the processor 201 operates to display a detail screen (second graphical user interface) of the selected item, which will be described below. In addition, when a long-time touching operation (operation in which a touched state is continued for predetermined time or more) is performed on an item image or the rectangular image, the processor 201 operates to display a menu screen for recording whether the item is discarded or consumed. In addition, it is possible to trigger various operations using the icons of the item images and the rectangular image.

Returning to FIG. 7, a process of the user terminal 20 when one of the item images and the rectangular image is selected will be described.

When an operation of selecting one of the item images and the rectangular image on the stock management screen 50 is detected (ACT 35), the processor 201 causes a detail screen including a detail of an item corresponding to the selected item image or the rectangular image to be displayed on the touch panel display 204 (ACT 36).

FIGS. 9A and 9B illustrate detail screens 51 and 52 according to the present embodiment, respectively. The detail screen 51 illustrated in FIG. 9A is suitable to display a consumption amount (remaining amount) of an item by a proportion. For example, the detail screen 51 is displayed when items such as a cabbage, a Japanese radish, and a Chinese cabbage are selected. The detail screen 52 illustrated in FIG. 9B is suitable to designate a consumption amount (remaining amount) of an item by number. For example, the detail screen 52 is displayed when items such as eggs, toilet paper, and processed goods which are sold by a bundle is selected.

Whether to display the detail screen 51 or 52 may be predetermined for each merchandise, or may be selected through a user operation.

The detail screen 51 includes, for example, an item image 70 of the selected item, and an item name, a volume slider 71 for inputting a consumption amount, and a list 73 of various kinds of information such as a store name, a purchase date, and the like, of the item. The volume slider 71 includes, for example, an arrangement of a plurality of marks which respectively correspond to consumed amounts of 0, 1/4, 1/2, and 3/4 along a line.

A user can simply designate a consumption amount of the selected by touching any one of the marks of the volume slider 71.

In addition, although the volume slider 71 illustrated on the detail screen 51 includes the plurality of marks, an arbitrary position on the line, instead of the marks, may be selected to designate the consumption amount of the item. That is, the processor 201 determines the consumption amount based on the position of the line touched by the user. Alternatively, in the detail screen 51, instead of the consumption amount of the item, a remaining amount of the item may be designated using the volume slider 71.

The detail screen 52 includes, for example, the item image 70 of the selected item, an item name, a number slider 75 for inputting the number of consumed pieces, and a list 73 of various kinds of information such as a store name, a purchase date, and the like, of the selected item. The number slider 75 includes, minimum and maximum values, and division marks corresponding to each number therebetween at even intervals, according to quantity data of the purchase management data. In FIG. 9B, as quantity data of an item "healthy egg" indicates that the item contains ten eggs, the maximum value "10" is displayed.

A user can easily designate the number of consumed merchandise by touching any one of the division marks arranged in the slider 75. FIG. 9B illustrates a numeral "3", which indicates that the number of consumed eggs is three, overlaid on a division mark corresponding to "3."

In addition, when the quantity data are not included in the purchase management data, or when a remaining number according to the quantity data is different from an actual remaining number of the item, the user can input the actual remaining number through the detail screen 52. When a user touches a display area 76 indicating the maximum numeral, the processor 201 causes a software keyboard for inputting numerals, or the like, to be displayed on the touch panel display 204. When a numeral is designated through an operation of the software keyboard, the processor 201 displays the designated numeral in the display area 76, and updates the number slider 75 according to the number of remaining pieces. In addition, the consumption amount data may indicate that all pieces of the item are consumed.

When a consumption amount is input through the detail screens 51 and 52 (Yes in ACT 37), the processor 201 causes the input consumption amount data to be stored in the memory 202 or the auxiliary storage unit 203 (ACT 38).

In addition, when the rectangular image 69 is selected in the stock management screen 50 (See FIG. 8), the processor 201 may operate to display a camera mark instead of the item images 70 of the detail screens 51 and 52. That is, selection of the camera image may trigger a function of capturing an item image using the camera unit 206.

When the camera image is touched by the user and an image capture of the item is instructed (Yes in ACT 39), the processor 201 starts up the camera unit 206 and starts to capture an image using the camera unit 206. The processor 201 switches a screen of the touch panel display 204 to a camera screen 54 displaying a through image (live view image) captured by the camera unit 206 (ACT 40). Here, when a shutter key (decision key) 56 is touched by a user, the processor 201 executes image capturing, and displays a still image on the touch panel display 204 (ACT 41).

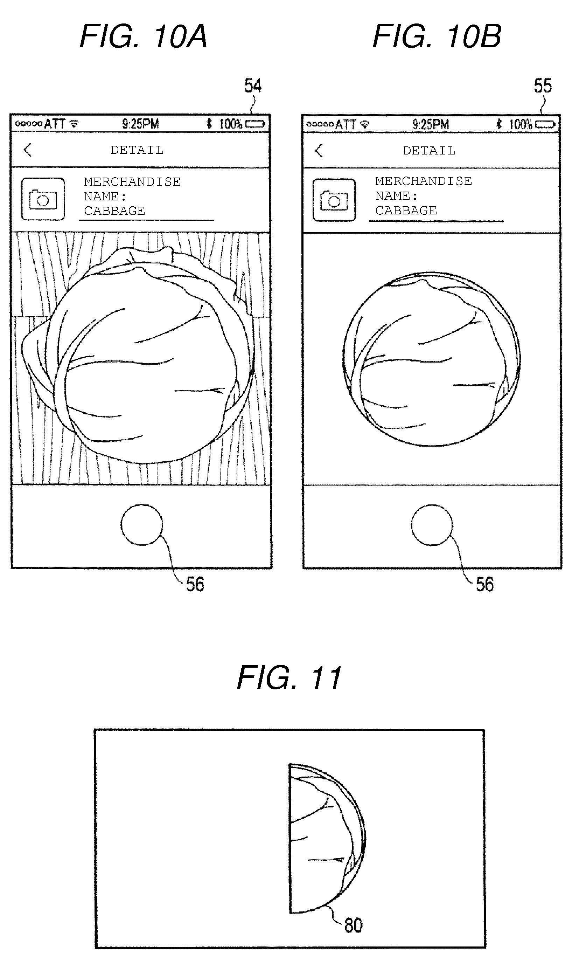

FIGS. 10A and 10B illustrate screen examples when an item image is captured according to the present embodiment. FIG. 10A illustrates a state in which a still image of "cabbage" is captured by the camera unit 206 in order to input an item image of "cabbage". The user can select a frame (range) of the image to be used as the item image, on the screen of FIG. 10A.

When a user operation is performed with respect to a screen which displays an image illustrated in FIG. 10A, the processor 201 operates to display a frame overlaid on the image as shown in FIG. 10B. The frame is movable on the screen in accordance with a user operation. FIG. 10B illustrates a screen 55 displaying a circular frame that circularly trims the captured image. A plurality of types of frames is prepared in advance, and shapes and sizes thereof are different, respectively. The processor 201 operates to display one of the plurality of frames, every time a flick operation is performed by a user.

A user selects a desired frame, and operates the decision key 56 after confirming the image to be set as the item image, as illustrated in FIG. 10B. The processor 201 records item image data of the framed image, according to the operation of the decision key 56 by the user (ACT 42).

In this manner, when the item image data are input, the processor 201 displays the item image 70 on the detail screen 51 or 52, and the item image on the stock management screen, according to the framed image data. The item image 60 illustrated in FIG. 8 is captured by and defined on the user terminal 20.

In addition, the above description assumed that the item image is defined for an item that does not have a corresponding item image on the stock management screen (item for which the rectangular image 69 is displayed); however, it is also possible to define (overwrite) an item image of an item that already has an item image on the stock management screen, which is generated based on merchandise image data included in the purchase management data.

In this manner, it is possible to perform stock management of items by displaying custom item images set by the user on the stock management screen, instead of item images prepared in advance on the system side.

In addition, in the above description, the consumption amount is set by operating the volume slider 71 or the number slider 75 displayed on the detail screens 51 and 52. Alternatively, it is possible to designate the consumption amount through an operation with respect to the item image as will be described below.

FIG. 9C illustrates a consumption amount input screen 53 for designating a consumption amount, through an operation with respect to an item image 77 displayed therein. FIG. 9C illustrates, for example, a state in which a user draws a line 79 which divides the item image 77 using a fingertip 78. The processor 201 operates to display the line 79 drawn by the user, and divides the item image 77 using the line 79. For example, it is set so that the left side of the item image 77 divided by the line 79 represents a consumed portion of the item. Accordingly, a user may perform a line drawing operation at an appropriate position, so that the left portion of the item divided by the line corresponds to the consumed portion.

In addition, the consumed portion may be selected through a selection operation of one of the left and right portions of the item image 77 divided by the line 79. For example, after dividing the item image 77 using the line 79, one of the left and right portions of the item image 77 may be touched. The processor 201 determines that the touched portion represents the consumed portion.

In addition, on the consumption amount input screen 53, it is also possible to divide the item image 77 using an oblique line or a curved line, or trim a part of the item image 77 using lines, instead of the vertical straight line illustrated in FIG. 9C.

In addition, a plurality of guide lines (not shown) may be displayed on the item image 77. For example, dashed lines may be displayed at positions at which a fourth, two fourths, and three fourths of the item image 77 is dividable, and a touch operation to select one of the dashed lines may be performed. In this manner, the user can easily perform the operation to designate the consumption amount, by displaying the guidance lines.

When the consumption amount is designated through the operation with respect to the item image 77 on the consumption amount input screen 53, the processor 201 records consumption amount data, similarly to the designation thereof through the detail screens 51 and 52.

In this manner, on the consumption amount input screen 53, it is possible to designate the consumption amount of the item using an intuitive touch operation with respect to the item image 77.

In addition, the consumption amount input screen 53 may be transitioned from the detail screen 51 or 52 in response to a predetermined operation on the detail screen 51 or 52, and a user may preset whether to use the detail screens 51 and 52, or the consumption amount input screen 53. In addition, items of which consumption amount data are input through the consumption amount input screen 53 may be preset.

The consumption amount input screen 53 in FIG. 9C is used for items that are suitable to designate the consumption amount (remaining amount) by proportion. However, it is also possible to use the consumption amount input screen 53 for items that are suitable to designate the consumption amount by number.

The processor 201 of the user terminal 20 operates to display an image of an item in the stock management screen so that whether or not the item is unused can be recognized, based on the consumption amount data stored in the memory 202 or the auxiliary storage unit 203 (ACT 36).

For example, as illustrated in FIG. 8, the processor 201 operates to display the use information image 64, which indicates that the remaining amount is 1/2, on the item image 60, according to the above described designation of the consumption amount. Similarly, the processor 201 operates to display the use information image 65, which indicates that the remaining amount is one third, on the item image 61. Similarly, the processor 201 operates to display the use information image 66, which indicates that the remaining amount is seven, on the item image 62, in response to an input operation of three as the consumption amount of an egg pack containing ten eggs as shown in FIG. 9B.

In this manner, the processor 201 displays item images (use information images) on the stock management screen, according to the consumption amount data corresponding thereto. In addition, when a display of the stock management screen is finished (Yes in ACT 43), the processor 201 transmits the consumption amount data that were input through the stock management screen to the purchase management server 40 (ACT 44). In addition, when the item image data is present, the processor 201 transmits the item image data to the purchase management server 40 along with the consumption amount data. Further, when a user input to designate that the item has been is discarded or fully consumed is performed, the processor 201 also transmits data indicating the discard or the full consumption to the purchase management server 40. By transmitting such data to the purchase management server 40, it is possible to display an updated consumption amount, a merchandise image, or the like, on the stock management screen, when the stock management screen is displayed in the subsequent time and thereafter.

In addition, in the above description, images of purchased items are displayed on the stock management screen based on receipt data; however, items other than the purchased items can be managed using the stock management screen, similarly.

For example, the user terminal 20 can manage foodstuff received from another user, and food, confectionery, or the like, made at home using the stock management screen. When registration of a new item is instructed through a user operation, the processor 201 starts a registration process using the purchase management application P22. Specifically, the processor 201 acquires image data of the new item by starting up the camera unit 206, similarly to the above described process of acquiring the item image data. In addition, the processor 201 operates to display a screen for inputting various kinds of data (image data, name, registration date, consumption timing, or the like) of the new item, so that a user can input each data.

When data necessary for managing the new item are input, the processor 201 adds an item image and a name of the new item to the stock management screen. It is possible to input the consumption amount of the new item through a user operation of the stock management screen.

Each data related to the added item (new item) are transmitted to the purchase management server 40 along with other data including consumption amount data, in ACT 44, when finishing display of the stock management screen. By transmitting the data related to the added item to the purchase management server 40, it is possible to display an updated merchandise image or the like of the added item on the stock management screen when the stock management screen is displayed in the subsequent time and thereafter.

When the consumption amount data are received from the user terminal 20 (Yes in ACT 17), the processor 401 of the purchase management server 40 records the consumption amount data in the auxiliary storage unit 403 in correlation with a member ID (ACT 18).

In addition, when the item image data of an item are received from the user terminal 20, the processor 401 records the item image data in the auxiliary storage unit 403 in correlation with the corresponding item. In addition, when data of an item newly added through the user terminal 20 are received, the processor 401 adds the data of the added item to the purchase management data is stored in the purchase management data region W42 of the auxiliary storage unit 403.

When the processor 401 determines that there is no remaining portion or pieces of an item based on the data received from the user terminal 20 (Yes in ACT 19), the processor 401 deletes the item from the purchase management data (ACT 20). As a result, an item image of the consumed item is deleted from the stock management screen.

In this manner, by storing the data added to the purchase management data through the user terminal 20, it is possible to generate stock management screen data reflecting the added data, and transmit the stock management screen data to the user terminal 20, when there is an access request from the user terminal 20 in the subsequent time and thereafter. On the stock management screen displayed on the user terminal 20, the user can intuitively recognize a remaining amount of items currently stocked in a refrigerator, for example.

Subsequently, operations of the purchase management server 40 and the user terminal 20 when the stock management screen is displayed on the user terminal 20 through the second method will be described. According to the second method, the user terminal 20 receives the purchase management data from the purchase management server 40, and generates the stock management screen data based on the purchase management data.

In the following description, points remarkably different from the first method will be mainly described.

When the purchase management application P22 is started up, in response to a user operation, and there is a request for displaying the stock management screen (ACT 31), the processor 201 of the user terminal 20 accesses the purchase management server 40 in order to display the stock management screen (ACT 32).

When an access request for displaying the stock management screen is received from the user terminal 20 (Yes in ACT 11), the processor 401 of the purchase management server 40 reads purchase management data corresponding to a user of the user terminal 20 from the purchase management data region W42 of the auxiliary storage unit 403, and transmits the purchase management data to the user terminal 20. Here, only latest data which have not been transmitted to the user terminal 20 are transmitted.

When the latest purchase management data are received from the purchase management server 40, the processor 201 of the user terminal 20 adds the received data to purchase management data which have been already received and stored in the purchase management data region W22, generates stock management screen data in a manner similar to ACTS 12 to 15 performed by the purchase management server 40, and causes the touch panel display 204 to display the stock management screen, as illustrated in FIG. 8 (ACT 34).

A display position of the images of the newly added items in FIG. 8 can be arbitrarily moved, for example, using a touch operation on the touch panel display 204 by a user. For example, when a touch of a position corresponding to an item image is detected, the processor 201 moves the item image in accordance with a movement of the touched position, and moves the item image to a position at which the touch ends. In addition, the processor 201 also changes location of the other item images according to the change of the display position of the touched item image.

In this manner, on the stock management screen 50, it is possible to arrange a plurality of item images so that a user can easily recognize a stock state of the corresponding items. For example, it is also possible to sort foodstuff such as vegetable, fruit, fish, and seasoning, based on the type of food, and to arrange item images so as to reflect actual storage position of the items in a refrigerator.

In addition, the processor 201 may change the arrangement based on predetermined conditions, instead of the user operation to designate the display position of the item images.

Processes after displaying the stock management screen on the user terminal 20 are performed in a manner similar to ACTS 35 to 43. The consumption amount data input through the detail screens 51 and 52 or the consumption amount input screen 53 are stored in the auxiliary storage unit 203 of the user terminal 20, and are updated according to newly-input consumption amount data.

when a request for displaying the stock management screen is input, the processor 201 overlays a use information image on an item image according to updated consumption amount data. When it is determined that there is no remaining portion or pieces of an item, the processor 201 deletes data of the corresponding item from the purchase management data stored in the purchase management data region W22, and removes a corresponding item image from the stock management screen.

In this manner, also through the second method, a stock management screen that enables a user to intuitively recognize a remaining amount of an item in stock can be displayed on the user terminal 20.

In the stock management screen illustrated in FIG. 8, a use information image which indicates a remaining amount of an item is overlaid on the corresponding item image. Alternatively, it is possible to display the remaining amount by other images illustrated in FIGS. 11, 12, 13, and 14. FIGS. 11 to 14 illustrate display examples of the remaining amount of an item.

FIG. 11 illustrates an item image 80, in which only a portion corresponding to the remaining amount is left (displayed). Since the displayed area of the item image 80 is changed, the user can intuitively recognize the remaining amount of the item.

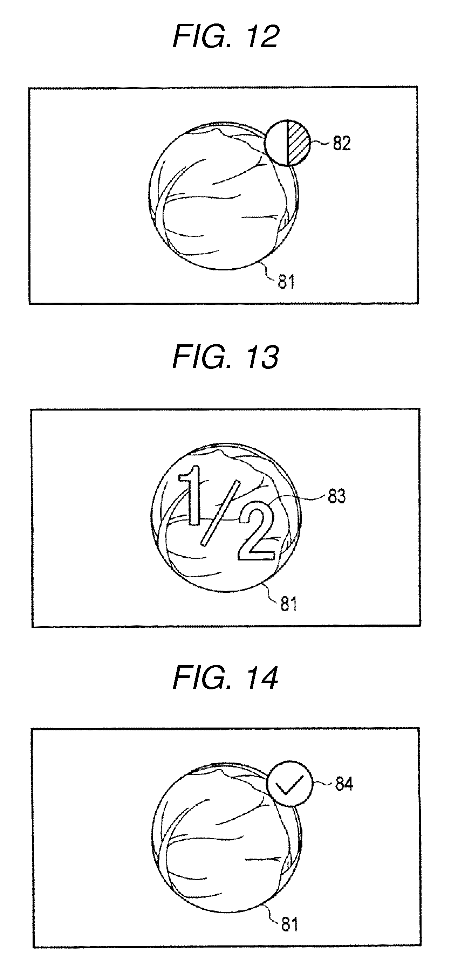

FIG. 12 illustrates a use information image 82 which is smaller than an item image 81, and represents a remaining amount of the corresponding item is displayed in adjacent to the merchandise image 81 (or by partially overlaid thereon). In FIG. 12, since the item image 81 is not hidden by the use information image 82, the user can easily recognize the item image 81.

FIG. 13 illustrates texts 83 indicating the remaining portion are overlaid on the item image 81. In FIG. 13, since the remaining amount is indicated by values, like "1/2", the user can easily recognize the remaining amount. In addition, the texts 83 may be displayed in adjacent to the item image 81, as illustrated in FIG. 12, instead of overlaying on the item image 81.

FIG. 14 illustrates a use information image 84, which indicates that the corresponding item is not unused (i.e., used) is partially overlaid on the item image 81. In FIG. 8, whether or not the item is unused is indicated by the use information image that shows a remaining amount thereof. In contrast, in FIG. 14, whether or not the item is unused is indicated by the use information image 84. Since the use information image 84 does not indicate the remaining amount of the item, the image is added according to a simpler operation, instead of the operations with respect to detail screens 51, 52, and the like. For example, when a predetermined operation, e.g. , a double tap operation, is performed with respect to the item image 81 displayed on the stock management screen, the processor 201 adds the use information image 84 to the item image 81. In this manner, it is possible to indicate that the item is not unused (i.e., used) through a simple operation on the stock management screen.

In the above description, a use information image indicating a consumption amount is displayed along with a corresponding item image, since foodstuff stored in a refrigerator is exemplified. However, it is also possible to apply the above embodiment to durable goods, such as clothing, a battery, or the like.

For example, it is possible to show a use state of the clothing by changing (decreasing) a size of an item image corresponding to the clothing, or fading a color thereof. In addition, a use information image of a battery, which shows the remaining amount of power, may be displayed along with an item image corresponding to the battery.

In addition, in the above description, the receipt server 30 and the purchase management server 40 are independently provided; however, a server which has functions of both the receipt server 30 and the purchase management server 40 may be provided.

In addition, in the above description, the first method and the second method are individually described; however, the above described stock management screen may be displayed by copperation of the user terminal 20 ( pruchase management application P22) and the purchase management server 40 (purchase management application P41).

In addition, processes according to the above described embodiment can be performed by a computer executing a program (purchase management application) stored in a recording medium such as a magnetic disk (flexible disk, hard disk, or the like), an optical disc (CD-ROM, DVD, or the like), and a semiconductor memory, for example. In addition, it is also possible to provide the program to perform the processes to various apparatuses by transferring the program using a communication medium. The computer executes the above described program by reading the program recorded in the recording medium, or receiving the program through the communication medium, and when operations thereof are controlled by the program.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A computing device configured to display a graphical user interface on a display unit thereof based on purchase data of one or more consumable items that have been received through a communication interface thereof and a user input that has been made on the computing device, the graphical user interface comprising:
a background layer including a virtual image of storage;
an item layer including one or more virtual images of said one or more consumable items, the item layer being overlaid on the background layer, so as to virtually indicate that said one or more consumable items are stocked in the storage; and
an indicator layer including one or more indicators, each of which corresponding to one of said one or more consumable items, the indicator layer being overlaid on the item layer, so that each of said one or more indicators indicates a consumption state of a corresponding consumable item.

2. The computing device according to claim 1, wherein
said one or more indicator includes a gauge image indicating remaining amount of a corresponding consumable item.

3. The computing device according to claim 1 or 2, wherein
said one or more indicator includes a value indicating remaining pieces of a corresponding consumable item.

4. The computing device according to any one of claims 1 to 3, wherein
the computing device is further configured to display a second graphical interface on the display unit, in response to a user selection of one of said one or more virtual images of said one or more consumable items, the second graphical user interface comprising a graphical region to set the consumption state of the corresponding consumable item.

5. The computing device according to claim 4, wherein
the graphical region includes a virtual slider image to set remaining amount and/or remaining pieces of the corresponding consumable item.

6. The computing device according to claim 4 or 5, wherein
the graphical region includes a virtual image of the corresponding consumable item and a dividing line overlaid on said virtual image to set remaining amount of the corresponding consumable item.

7. A method for displaying one or more graphical user interfaces for a computing environment, the method comprising:
receiving purchase data of one or more consumable items;
receiving a user input to set a consumption state of each of said one or more consumable items;
displaying a graphical user interface based on the received purchase data and the user input, the graphical user interface including:
a background layer including a virtual image of storage;
an item layer including one or more virtual images of said one or more consumable items, the item layer being overlaid on the background layer, so as to virtually indicate that said one or more consumable items are stocked in the storage; and
an indicator layer including one or more indicators, each of which corresponding to one of said one or more consumable items, the indicator layer being overlaid on the item layer, so that each of said one or more indicators indicates a consumption state of a corresponding consumable item.

8. The method according to claim 7, wherein
said one or more indicator includes a gauge image indicating remaining amount and/or remaining pieces of a corresponding consumable item.

9. The method according to claim 7 or 8, further comprising:
displaying a second graphical user interface, in response to a user selection of one of said one or more virtual images of said one or more consumable items, the second graphical user interface comprising a graphical region to set the consumption state of the corresponding consumable item.

10. The method according to any one of claims 7 to 9, wherein
the graphical region includes a virtual slider image to set remaining amount and/or remaining pieces of the corresponding consumable item.

11. The method according to any one of claims 7 to 10, wherein
the graphical region includes a virtual image of the corresponding consumable item and a dividing line overlaid on said virtual image to set remaining amount of the corresponding consumable item.

12. A non-transitory computer-readable storage medium comprising instructions that, when executed in a computing device provide for displaying one or more graphical user interfaces for a computing environment, by performing the steps of:
receiving purchase data of one or more consumable items;
receiving a user input to set a consumption state of each of said one or more consumable items;
displaying a graphical user interface based on the received purchase data and the user input, the graphical user interface including:
a background layer including a virtual image of storage;
an item layer including one or more virtual images of said one or more consumable items, the item layer being overlaid on the background layer, so as to virtually indicate that said one or more consumable items are stocked in the storage; and
an indicator layer including one or more indicators, each of which corresponding to one of said one or more consumable items, the indicator layer being overlaid on the item layer, so that each of said one or more indicators indicates a consumption state of a corresponding consumable item.

13. The computer-readable storage medium according to claim 12, wherein
said one or more indicator includes :
- a gauge image indicating remaining amount of a corresponding consumable item, and/or
- a value indicating remaining pieces of a corresponding consumable item.

14. The computer-readable storage medium according to any one of claims 12 to 13, wherein the steps further comprises displaying a second graphical user interface, in response to a user selection of one of said one or more virtual images of said one or more consumable items, the second graphical user interface comprising a graphical region to set the consumption state of the corresponding consumable item.

15. The computer-readable storage medium according to any one of claims 12 to 14, wherein
the graphical region includes a virtual slider image to set remaining amount and/or remaining pieces of the corresponding consumable item.
